# EUROPEAN PATENT APPLICATION

(11) **EP 4 513 072 A1**
(43) Date of publication of application: **26.02.2025**
(21) Application number: 23192791.4
(22) Date of filing: 22.08.2023
(51) Int. Cl.: F16L 27/10, F16L 27/111, F16L 27/12, F16L 41/02, F16L 51/00, F16L 51/02, F16L 51/03, F16L 55/11, H01R 13/00

(54) **APPARATUS FOR LENGTH COMPENSATION, INDUSTRIAL DEVICE, METHOD AND USE**

(71) Applicant: Hitachi Energy Ltd, 8050 Zürich (CH)
(72) Inventor: Meng, GuoZhu, Fujian, 361000 (CN); Chen, TianSong, Fujian, 361011 (CN); Liu, Xiaohao, Fujian, 361101 (CN); Richter, Markus, 8117 Fällanden (CH)
(74) Representative: Michalski Hüttermann & Partner Patentanwälte mbB

(57) **Abstract**

The invention relates to an apparatus (20) configured for length compensation of a pipe structure (10), comprising
a housing element (30) with at least three openings (31, 32, 33) of which a first opening (31) is configured for coupling with the pipe structure (10);
a coupling element (40) movably connected with the housing element (30) at a second opening (32) of the at least three openings (31, 32, 33), configured for a movement in a coupling direction (41) and configured for coupling with the pipe structure (10); and
a compensation element (50) movably connected with the housing element (30) at a third opening (33) of the at least three openings (31, 32, 33) ), configured for a movement in a compensation direction (51) oblique to the coupling direction (41) and closing the third opening (33).

## Description

### Technical Field

The invention relates to an apparatus configured for length compensation of a pipe structure. The invention further relates to an industrial device, a method and a use.

### Background Art

Pipe structures of various types, e.g., those comprised by gas-insulated switchgear, gas-insulated transmission lines or fluid carrying lines, remain an area of interest. Some existing systems have various shortcomings, drawbacks and disadvantages relative to certain applications. Typically, pipe structures are subject to thermal expansion in that the length of the pipe structures may change which length change may for example act on apparatuses attached to the pipe structures. For example, in some pipe structures, improvements in their construction and/or properties for a better reliability and/or for reduced cost to produce or cost of operation may be made, particularly in view of handling the thermal expansion of the pipe structure without damage to the pipe structure and/or leakage of the fluid. It is also desired to have the apparatus be more flexible with regard to tolerances in length of the attached pipe structure Accordingly, there remains a need for further contributions in this area of technology.

### Summary of invention

It is an object of the invention to provide solutions where length compensation of a pipe structure is improved in reliability, flexibility, cost to produce and/or cost to operate. Particularly, it is an object to avoid or reduce disadvantages of known solutions.

The object of the invention is solved by the features of the independent claims. Preferred implementations are detailed in the dependent claims.

Thus, the object is particularly solved by an apparatus configured for length compensation of a pipe structure, and especially configured as a joint, comprising
a housing element with at least three openings of which a first opening is configured for coupling with the pipe structure;
a coupling element movably connected with the housing element at a second opening of the at least three openings, configured for a movement in a coupling direction and configured for coupling with the pipe structure; and
a compensation element movably connected with the housing element at a third opening of the at least three openings, configured for a movement in a compensation direction parallely offset to or oblique to the coupling direction and closing the third opening.

In other words, as an example, an apparatus is suggested that can handle a change in length of a pipe or a conduit and that can be used to connect pipes or conduits with each other or serve as a connector therefor. The apparatus has a base structure with three or more openings. The openings typically stand in fluid communication with each other. One opening can be connected (e.g. directly, e.g. via a flange) to a pipe. Another opening is provided with a movable, e.g. flexible, structure in particularly the form of a connector that can be connected to another pipe. Another opening is provided with a movable, e.g. flexible, structure particularly in the form of a closure or cap that shall serve to close said opening, especially wherein moving said structure may increase or decrease a volume contained between closure/cap and opening. The movable structure that shall serve to close said opening may be movable at least sectionally, especially back and forth, in a direction that is oblique / slant to the direction of movement of the movable structure that can be connected to another pipe. So the movements may point in different directions.

The object is furthermore solved by an industrial device, which industrial device is a gas-insulated switchgear, a gas-insulated transmission line and/or a fluid carrying line. The industrial device comprises the apparatus and a pipe structure, wherein the pipe structure is coupled to the apparatus and configured to carry a fluid, especially wherein the apparatus is configured as a joint for the pipe structure.

The object is furthermore solved by a method for length compensation of a pipe structure, particularly wherein the pipe structure is comprised by the industrial device, which pipe structure is coupled to a coupling element of an apparatus configured for length compensation of a pipe structure and especially configured as a joint, comprising the steps of moving the coupling element relative to a housing element of the apparatus in a coupling direction particularly by means of expansion or contraction of the pipe structure, and meanwhile moving a compensation element relative to the housing element proportionately to the movement of the coupling element in a compensation direction which may be oblique to the coupling direction, particularly wherein a pressure is exerted on the compensation element pushing the compensation element away from the housing element which induces a pull force onto the coupling element.

The object is furthermore solved by a use of the apparatus as described herein for length compensation of and/or as a joint for a pipe structure, wherein the pipe structure is comprised by an industrial device which is a gas-insulated switchgear, a gas-insulated transmission line and/or a fluid carrying line, particularly wherein the pipe structure is used for carrying a fluid and/or carries a fluid, such as gas, steam, liquid or a mixture thereof, particularly the fluid being electrically insulating.

The invention provides that cost of operation and cost of installation of a pipe structure can be reduced due to an enhanced solution for length compensation. The length compensation can now be carried out easily by means of the apparatus, especially within a joint. For example, the apparatus may be configured as a pipe joint for the pipe structure. In some embodiments, it is easily possible that the apparatus changes its volume adapted to the application, for example for a pressure adjustment or compensation. It is possible that the compensation element can move in order to increase or decrease a volume between the compensation element and the corresponding opening; this could be useful for automatic pressure adaption, for example in the case the compensation element reacts to a change in pressure by movement. The load or stress to the connected pipe structure(s) is reduced due to the movability of the coupling element relative to the housing element. It may be possible to use less expensive materials of the apparatus relative to known solutions. For example, the housing element, the coupling element and/or the compensation element may not necessarily be made of stainless steel, but rather steel and/or aluminum or aluminum alloy.

The present invention provides that a much larger axial displacement of the attached pipe structure may be compensated relative to prior art solutions. The material cost of the apparatus is lower compared to the prior art solutions.

The term `length compensation' typically refers to a solution which takes into account that a length of an elongated element or structure which may change during operation is balanced so that the operation can be ensured. For example, if the length of the elongated element or structure decreased, something is provided that may reversibly extend its length while providing the typical function, especially being leak-proof and/or keeping an inner static pressure.

The pipe structure typically refers to a construction, device or apparatus which has at least one (possibly more than one, e.g. two and/or a plurality) pipe, cylinder, conduit, duct, passage, pipeline and/or the like. Said pipe structure may hold, transport or carry a fluid, e.g. a gas, a liquid, or a mixture thereof. For example, a pipe structure may be filled with insulating gas and may hold in its inside a conductor, which essentially forms a part of gas-insulated transmission line. In another example, a pipe structure may be a fluid transport line in the sense of supplying the fluid somewhere. It is typically crucial for the pipe structure that there is an elongated, preferably essentially hollow, element which for example is to be connected on one end to the apparatus of the present invention. Typically, two pipes of the pipe structure can be coupled to the apparatus.

The joint typically refers to a component which at least sectionally can be connected mechanically to the pipe structure. The joint typically is configured to provide a mechanical connection within a pipe structure and/or between pipes, which connection allows for the transfer of fluids. The joint may be understood and/or configured as a pipe joint and/or pipe connector and/or pipe coupling. Preferably, the joint is designed to provide a leak-proof and/or fluid tight connection while for example allowing for assembly and disassembly of the pipe structure and/or pipe(s) when necessary.

The housing element typically refers to a structure made of a solid material, e.g. metal, especially steel and/or aluminum or aluminum alloy. The housing element may be a monolithically formed component and/or made in one piece. The housing element typically provides a case and/or duct for the fluid. The housing element typically has mechanical stability in order to connect said housing element directly or indirectly to the pipe structure and/or to pipe(s). In its inside, the housing element may be typically designed to be in especially direct contact to the fluid supply from the pipe structure and/or pipe(s).

The housing element may have three or more openings. At least two or three or more of the openings may be in fluid connection with each other, especially via the housing element and/or the inside of the housing element. The opening is generally to be understood as an orifice, a port, a nozzle, a hole and/or a bore and/or a connector at the housing element which for example provides an inlet and/or outlet of the housing element.

The term 'movably connected' with respect to two structures being connected typically refers to the connection allowing for a movement of at least one section of one structure relative to at least one section of the other structure. For example, the coupling element formed at least in part as a piston, which piston is slidably held and/or guided in the housing element, is movably connected to the housing element due to the fact that the piston can be moved back and forth in one direction and being fixed oblique to that direction. As another example, the coupling element formed at least in part as a bellow, which bellow is on one end mounted, especially flange-mounted, to the housing element and on the other end configured to be mounted, especially flange-mounted, to the pipe structure, is movably connected to the housing element due to its flexibility allowing for a movement of at least one section of the bellow relative to the housing element and due to the bellow being fixedly held at the housing structure.

The term 'coupling' typically refers to connecting and/or joining two or more elements or components together, facilitating the transfer of force, motion, energy and/or fluid between them. The coupling element may provide a secure and reliable connection to another element or component, ensuring the efficient transmission of mechanical, electrical, and/or fluidic signals. The coupling element may incorporate various means of attachment, including but not limited to interlocking features, fasteners, bolts, latches, clamps, and/or adhesives. The coupling element is preferably designed to allow for easy assembly and disassembly of the connected components, enabling efficient maintenance, repair, or replacement, without the need for specialized tools or equipment. The coupling element may incorporate additional features such as alignment guides, guiding rods, locking mechanisms, and/or sealing elements, which enhance the overall performance, stability, and longevity of the connection.

The term 'closing the opening' typically refers to obstructing or blocking the opening, especially by means of the compensation element. The compensation element is typically shaped to comprise the function of a closure for one of the opening. For example, when the compensation element is shaped as a plunger or as a piston to be guided in the corresponding opening, said corresponding opening may be closed by means of the compensation element, e.g. having a lid and/or closure. Typically, the opening is closed in a leak-proof and/or fluid tight manner especially with the compensation element being movable.

Gas-insulated switchgear or gas-insulated transmission lines are known in the art of medium voltage and high voltage switching applications. Switchgear may be used to interrupt and/or transmit a nominal electrical current. For the purposes of this disclosure, the term medium voltage refers to a voltage from 1 kV to 72.5 kV, and the term high voltage refers to a voltage greater than 72.5 kV. Gas-insulated switchgear or gas-insulated transmission lines may have to be capable of carrying high nominal currents of 3150 A to 6300 A and transmitting or switching very high short-circuit currents of 31.5 kA to 80 kA at high voltages of 72.5 kV, particularly up to 1200 kV. Particularly, the gas-insulated switchgear or gas-insulated transmission line as disclosed herein relates to a high voltage circuit application.

In the following, implementations of the invention are described. The implementations may be combined or considered individually. Specific aspects/features described in the context of any of the implementations may be considered individually or in combination. The implementations pursue further optimization of the invention and provide the advantages as described herein.

In a first preferred implementation the coupling element is at least sectionally movable relative to the housing element along a/the coupling direction. Alternatively or additionally the compensation element is at least sectionally movable relative to the housing element along the compensation direction. Thus, one or both of the coupling element and the compensation element may be movable along a distinct direction which for example facilitates the possibility for a monitoring of changes in positions, e.g. by means of sensors and/or by plain view. The coupling direction and/or the compensation direction may be linear and/or arranged within a plane for a compact construction of the apparatus.

The coupling element may be at least sectionally movable relative to the housing element along the coupling direction and especially over a distinct distance. The compensation element may be at least sectionally movable relative to the housing element along the compensation direction and especially over a further distinct distance which substantially equals the distinct distance or which is with the further in a distinct ratio. For example, both elements may be movable over a similar distance or over different distances. For example, one or both elements may be sectionally movable relative to the housing element in that a part or a section of the corresponding element is movable, e.g. when a flexible section is involved such as in the case of a bellow or the like.

In another implementation in order to make the apparatus be compact, the coupling direction and the compensation direction are arranged at a motion angle of more than 0° or 10° and/or less than 180° or 170°, more preferably at a motion angle of at least 45° and/or up to 105°, in particular at a motion angle of 90°±10° and/or perpendicular, to each other. The coupling direction and the compensation direction may be arranged to point towards different directions and/or may be arranged to intersect each other. The directions could alternatively or additionally run in parallel.

In another implementation, the first opening and the second opening are arranged on opposite sides of the housing element and/or face away from each other, preferably wherein the third opening is arranged between the first and the second openings. For example, the first and the second opening may be arranged substantially coaxial so that the apparatus especially as a joint can be implemented within a straight line. The third opening may be arranged between the other openings, preferably pointing away from the other openings, for a compact construction. Particularly, all openings may be arranged to face away from each other. This particularly ensures a compact design which is enhanced with regard to maintenance.

In another implementation the compensation element has a preferably cylindrical section guided in or on a preferably cylindrical section of the housing element particularly along the compensation direction. Alternatively or additionally the coupling element has a preferably cylindrical section guided in or on a preferably cylindrical section of the housing element particularly along the coupling direction. Preferably, the compensation element and/or the coupling element may be shaped at least in part as a piston running in contact with a cylinder, wherein the coupling element's piston may be hollow and/or have a sleeve shape forming a tunnel for the fluid and/or wherein the compensation element's piston may be a closed piston sealing the opening where it is arranged at. This embodiment particularly ensures a smooth and proportionate change in volume between the corresponding front end of the coupling/compensation element (facing away from the housing structure) and the corresponding opening upon a movement of the coupling/compensation element. Cylindrical sections are easy to clean, to grease and to maintain.

In another implementation the coupling element and/or the compensation element has a bellow. For example, the coupling element may be attached, e.g. flange-mounted, on one end of its bellow to the housing element and on the other end of said bellow configured to be coupled, e.g. flange-mounted, with the pipe structure. For example, the compensation element may be attached, e.g. flange-mounted, on one end of its bellow to the housing element and on the other end of said bellow closed, e.g. with a lid, a cap and/or closure, wherein the fluid may enter said bellow (only) from the housing. Thus, the compensation element with the bellow may as well close the housing element, wherein the bellow may be guided, e.g. on guiding rods or the like.

In another implementation the coupling element and/or the compensation element is axially guided relative to the housing element by means of (a) guiding ring(s) and/or (a) guiding rod(s). The guiding ring or rings may be arranged in the housing element, particularly in the corresponding opening, to run in particularly annular contact with the coupling element and/or compensation element, especially for an axial guidance. Particularly, two or more guiding rings are provided for per coupling element and/or compensation element. The guiding rod or rods may be arranged on the housing element, particularly next to the corresponding opening, to run along the coupling and/or compensation element, e.g. in a guiding recess, particularly a bore, thereof. Particularly, two, three, four, or more guiding rods are provided per coupling element and/or compensation element. The guiding rods may be fixedly coupled with the housing element.

In another implementation the apparatus is particularly configured for a pressure balanced length compensation. This particularly means that the change in length of a coupled pipe structure - which inherently induces a change in volume - could induce a corresponding change in volume by means of the apparatus. For example, when the pipe structure would increase in length due to a temperature increase, the apparatus would make up the decrease in volume at the apparatus from moving the coupling element (e.g. moving a piston inwards and/or compressing a bellow) by means of the compensation element (e.g. moving a piston outwards and/or expanding a bellow).

With respect to the pressure balanced length compensation, the coupling element and the compensation element may be motion-coupled, preferably by means of a linkage device comprised by the apparatus. There may be two or more linkage devices comprised by the apparatus, for example one linkage device per side of the housing element and/or on opposite sides of the housing element. The linkage device may comprise at least one or a plurality of a gearbox, a pulley, a lever, a drive shaft, a motor or the like. The linkage device may serve to link two components in terms of their movements. It may be that the linkage device provides or functions by means of a fully mechanical link, an electrical link, an electro-mechanical link or an hydraulical and/or pneumatical link or any combination of these. Particularly, the coupling element and the compensation element may be directly or indirectly linked in terms of their movements. Preferably, it is provided that and/or the apparatus is configured so that a first motion of one of the coupling element and the compensation element induces a second motion of the other one of the elements. The movements or motions may be subject to a reduction or gear reduction or gear transmission ratio or may be transmitted without reduction or the like. This coupling provides an automatic balance / compensation of pressure and/or volume in the apparatus due to the input length change to the coupling element.

Particularly, it is provided that the first and second motions are coupled at a preferably at least sectionally proportionate gear or coupling ratio, particularly the gear or coupling ratio being i <= 0,9 or i <= 0,5 or i <= 0,75 or i = 1 or i = 1±5% or i >= 1,1 or i >= 1,5 or i >= 2. By means of the gear or coupling ratio it could be a movement of 1 centimeter of the coupling element on the one side will induce a movement of 1 centimeter of the compensation element on the other side (i = 1 or i = 1±5%). It could as well be - especially in the case of the gear or coupling ratio not being i = 1 - that a movement of 1 centimeter on the one side may induce a movement of 0,5 centimeter (i > 1 and/or i = 2) or of 2 centimeters (i < 1 and/or i = 0,5) on the other side.

In another implementation a cross sectional area of the coupling element at least substantially equals, is larger than or is smaller than a cross sectional area of the compensation element. The cross sectional area is typically considered perpendicular to the coupling direction or the compensation direction, respectively. For example, the cross sectional area of the coupling element is meant with respect to the cross sectional area of the attached pipe structure and/or the cross sectional area of the second opening, especially based on a corresponding inner nominal diameter. For example, the cross sectional area of the compensation element is meant with respect to the cross sectional area of its lid or closure and/or the cross sectional area of the third opening. In this way, a certain movement of the coupling element can be proportional to a movement of the compensation element, so that no change in volume in the overall device (e.g. pipe structure with attached apparatus as a joint) may occur during the change in length of the pipe structure. This configuration is additionally beneficial with the gear or coupling ratio being i = 1 or i = 1 ±10% or i = 1±5%. When the cross sectional areas of the elements are quantitatively different to each other, this may effectively reduce or increase longitudinal force to the compensation element static fluid pressure. This configuration also supports that the compensation element is automatically pushed by means of a fluid pressure, wherein the resulting force may be large enough - and not too large - to assure that the pressure balanced length compensation may take place while the construction can be made with standard materials or standard components. In other words, it has been proven as a very economic concept.

In another implementation the linkage device comprises at least one cable, particularly a tension cable. The at least one cable may be redirected and/or diverted, for example about a pulley (e.g. a diverter pulley and/or a roll). The pulley is particularly comprised by the linkage device. The at least one cable is particularly coupled on one end to the compensation element and/or on another or the other end to the coupling element. The at least one cable may comprise a rope, such as a wire rope, e.g. comprising metal or steel, particularly metal wires or steel wires. In this case, a gear or coupling ratio of i = 1 is easily provided.

In another implementation the linkage device comprises a coupling lever means with at least one coupling lever particularly having at least one coupling hinge and/or link. The coupling lever means, particularly the coupling lever, may be mechanically coupled with both of the coupling element and the compensation element, e.g. via the at least one coupling hinge and/or link. The coupling could be directly or indirectly. For example, the coupling lever means may comprise a plurality of coupling levers, e.g. two or more coupling levers. For example, the coupling lever means may comprise a hub and/or turntable, especially linked between the coupling element and the compensation element. The hub and/or turntable may have at least one coupling hinge and/or link, particularly two or more coupling hinges and/or links for coupling with a coupling lever and/or the coupling element or the compensation element. The coupling lever means is particularly to be understood as a mechanism for realizing a/the motion-coupling between the coupling element and the compensation element.

In another implementation the linkage device comprises at least one rack and pinion means. The at least one rack and pinion means is particularly configured to redirect and/or transmit translational movements, especially at a/the motion angle between two directions. The at least one rack and pinion means particularly includes racks and a gear wheel, particularly wherein at least one of the racks is motion-coupled to one of the compensation element and the coupling element; another of the racks may be motion-coupled to the other of the compensation element and the coupling element. Particularly one or both of the racks engage with the gear wheel. Particularly the gear wheel is rotatably held on the housing element or a base of the apparatus. A base may be provided so that the forces acting on the housing element can be reduced, especially when the gear wheel is mounted on the base.

For example, the at least one rack and pinion means comprises a first movable rack, a pinion, and a second movable rack. The first rack may be a toothed member that may receive a translational movement input and is movable along a first direction (e.g. together with the coupling element, e.g. in the coupling direction). The pinion may be a circular gear wheel with teeth, wherein the teeth particularly mesh with the teeth of both the first and second racks. The second rack may be a toothed member, movable along a second direction (e.g. together with the compensation element, e.g. in the compensation direction), particularly forming an angle with the first direction and/or forming the motion angle. As the first rack may move along its direction, the pinion transfers by rotation the motion to the second rack, effectively redirecting the translational movement while changing the angle between the two directions.

The rack(s) and/or the pinion may engage via and/or comprise at least one involute splines or involute teeth. The pinion may be supported by means of a bearing, particularly a ball or axle bearing and/or comprised by the rack and pinion means and/or the apparatus. The rack(s) may be supported by means of a linear bearing, particularly including rolling elements and/or comprised by the rack and pinion means and/or the apparatus. The rack and pinion means may include or realize a gear ratio different from i = 1; a gearbox may be included in and/or used together with the rack and pinion means.

### Brief description of drawings

These and other aspects of the invention will be apparent from and elucidated with reference to the implementations described hereinafter.

In the drawings:
Fig. 1 shows a first embodiment of an apparatus configured for length compensation of a pipe structure and as a joint in an explosion view and/or a disassembled state;
Fig. 2A-C shows an industrial device which is a gas-insulated transmission line and which comprises the apparatus of Fig. 1 in an assembled state as a joint and a pipe structure with two pipes coupled by the apparatus in a side view and in a fully pushed in position (A), a mid position (B) and a fully outward position (C) of a coupling element of the apparatus;
Fig. 3 shows the apparatus of Fig. 1 in a side view;
Fig. 4 shows the apparatus of Fig. 1 in a longitudinal cross section;
Fig. 5A-B shows a second embodiment of an apparatus comprised by an industrial device, which apparatus has a base, in a side view (A) and in perspective partially disassembled view (B);
Fig. 6 shows a third embodiment of an apparatus comprised by an industrial device, which apparatus has bellows, in a side view;
Fig. 7 shows a fourth embodiment of an apparatus comprised by an industrial device, which apparatus has a linkage device including coupling lever means, in a side view;
Fig. 8A-B shows a fifth embodiment of an apparatus comprised by an industrial device, which apparatus has a linkage device with a tension cable, in a perspective view (A) and a cross-sectional view (B); and

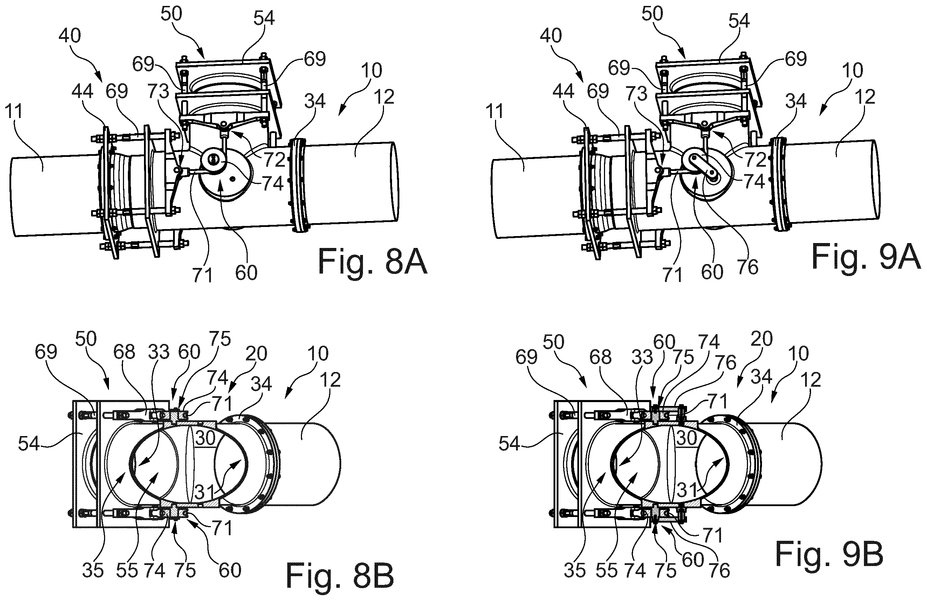

Fig. 8A-B shows a sixth embodiment of an apparatus comprised by an industrial device, which apparatus has a linkage device with a tension cable, in a perspective view (A) and a cross-sectional view (B).

### Description of implementations

The description contains procedural or methodical aspects upon describing structural features of the apparatus and/or industrial device; the structural features can be understood well in that way. It is emphasized to the reader that such structural features can be lifted from the described context without hesitation or the question of an intermediate generalization to form aspects of the invention. It is also emphasized to the reader that any the structural features described in the following can be understood as individual aspects of the invention to distinguish from known solutions, despite being possibly lifted from the context.

It is noted that aspects of the above described and shown embodiments may be combined. The same conceptual assignments may apply for equal reference signs.

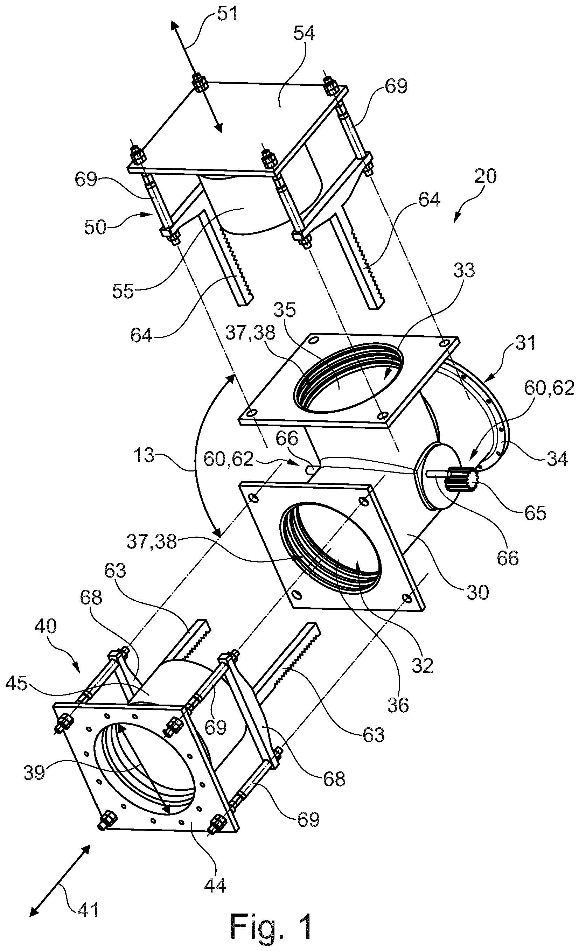

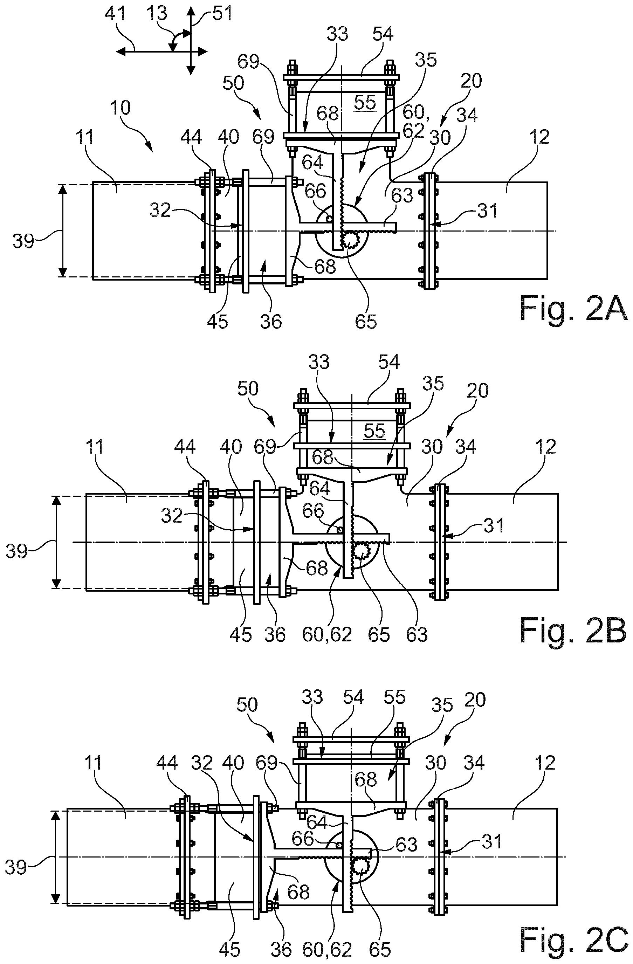

In Fig. 1 an apparatus 20 according to a first embodiment is shown. The apparatus 20 is configured for length compensation of a pipe structure 10 (not shown in Fig. 1, but for example in Fig. 2) and is configured as a joint. The apparatus 20 has a housing element 30 with three openings 31, 32, 33.

The first opening 31 is configured for coupling with the pipe structure 10 via a flange 34. The flange 44 is formed with the housing element 30. The second opening 32 is to be equipped with a coupling element 40 (in Fig. 1 the coupling element 40 is shown at a distance to the opening 32), which coupling element 40 can be movably connected with the housing element 30, e.g. inserted into the second opening 32. The coupling element 40 is configured for coupling with the pipe structure 10 via a flange 44. The third opening 33 is configured to be equipped with a compensation element 50 (in Fig. 1 the compensation element 50 is shown at a distance to the opening 33, thus the third opening 3 is not equipped with the compensation element 50), which compensation element 50 can by movably connected with the housing element, e.g. inserted into the third opening 33. The compensation element 50 is configured for closing the third opening 33, e.g. the compensation element 50 has and/or is formed with a lid and/or closure.

When inserted into the second opening 32, the coupling element 40 is movable relative to the housing element 30 along a coupling direction 41, cf. different positions of the coupling element 40 as shown in Figs. 2A-C. When inserted into the third opening 33, the compensation element 50 is movable relative to the housing element 30 along a compensation direction 41, cf. Figs. 2A-C. The coupling direction 41 and the compensation direction 51 are arranged oblique, particularly perpendicular to each other, e.g. at a motion angle 13 of 90°. The first opening 31 and the second opening 32 are arranged on opposite sides of the housing element 30 and face away from each other. The third opening 33 is arranged between the first opening 31 and the second opening 32. Typically, the third opening 33 points upwards and/or away from the ground.

The compensation element 50 has a cylindrical section 55 to be guided in a cylindrical section 35 of the housing element 40 along the compensation direction 51. The coupling element 40 has a cylindrical section 45 to be guided in a cylindrical section 36 of the housing element 40 along the coupling direction 41. Thus, the cylindrical sections 45, 55 can be guided in corresponding cylindrical sections 35, 36 of the housing element 30.

The coupling element 40 and the compensation element 50 can be axially guided relative to the housing element 30 by means of guiding rings 37.

The apparatus 20 of the first embodiment is configured for a pressure balanced length compensation. The coupling element 40 and the compensation element 50 can be motion-coupled by means of a linkage device 60 of the apparatus 20, wherein Fig. 1 merely shows a disassembled state where said motion-coupling is not given yet. In an assembled state (cf. Figs. 2-4), a first motion of the coupling element 40 or the compensation element 50 induces a second motion of the compensation element 50 and the coupling element 40, respectively. The first and second motions are coupled at a proportionate gear or coupling ratio which is i = 1.

The cross-sectional area of the coupling element 40 equals the cross-sectional area of the compensation element 50. The cross-sectional areas essentially reflect the area in the second 32 and/or third opening 33, particularly considered perpendicular to the corresponding direction 41, 51. In the present case, the cross-sectional area can be calculated by means of a diameter 39 at the openings 31, 32, 33 and/or at the flanges 34, 44.

Particularly, two linkage devices 50 are provided, each on one side of the apparatus 20. The two linkage devices 60 are substantially identical and/or arranged mirror-inverted relative to a plane through the coupling direction 41 and/or the compensation direction 51. Each of the linkage device 50 as shown in Figs. 1 to 4 has a rack and pinion means 62 including a rack 63, a gear wheel 65 and another rack 64. The rack and pinion means 62 comprises teeth, particularly involute splines, to engage with each other at little play.

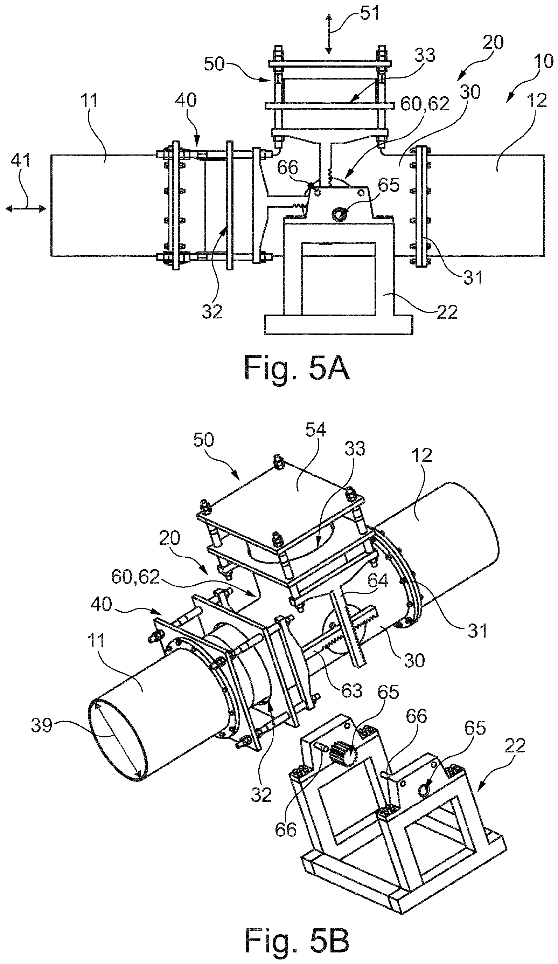

The racks 63, 64 are configured to be motion-coupled via the gear wheel 65. Typically, the rack 63 is formed with a crossbar 68 and attached and/or motion-coupled via two guiding rods 69 to the coupling element 40, particularly to the flange 44. The another rack 64 is formed with a crossbar 68 and attached and/or motion-coupled via two guiding rods 69 to the compensation element 50, particularly to the lid and/or closure thereof. The rack 63 is arranged substantially in parallel to direction 41. The another rack 64 is arranged substantially in parallel to direction 51. The racks 63, 64 may stop at a stop element 66 of the linkage device 60, particularly fixed at the housing element 30 (cf. first embodiment / Figs. 1 to 4) or at a base 22 (cf. second embodiment / Fig. 5A-B).

According to the first embodiment of the apparatus 20, the gear wheel 65 is rotatably mounted on the housing element 40, e.g. by means of a bearing. The rotational axis of the gear wheel 65 is particularly arranged perpendicular to one or both of the directions 41, 51.

With respect to Figs. 2A-C, an industrial device including a pipe structure 10 and the apparatus 20 of the first embodiment is shown. Figs. 2A-C further elucidate the function of a pressure balanced length compensation, wherein a volume inside of the apparatus 20 particularly stays substantially constant due to motion-coupling of elements 40, 50.

The industrial device typically contains a fluid static pressure in its inside and/or of the fluid which fluid static pressure is greater than the static pressure of the environment, e.g. atmospheric pressure of approx. one bar. For example, the fluid static pressure is 5 to 10 bar.

The industrial device is a gas-insulated transmission line with the apparatus 20 as a joint for pipes 11, 12 of the pipe structure 10. The pipe structure 10 is configured to carry a fluid, especially an electrically insulating gas, for example SF6 gas. Inside of the pipe structure 10 an electrical conductor is provided in the fluid to conduct electricity via the apparatus 20. Thus, the pipe structure 10 is coupled to the apparatus 20. Upon a change in length of the pipe 11 or the pipe 12, the coupling element 40 may move relative to the housing element 30. For example, when the length of the pipe 11 decreases (cf. transition from Fig. 2A to Fig. 2B or 2C), the coupling element 40 may retract a bit from the second opening 32 and/or the cylindrical section 36. Upon this movement of the coupling element 40, the rack and pinion means 62 serves to transmit said movement to the compensation element 50 proportionately at the motion angle 13 of 90°, wherein the compensation element 50 is being moved inwardly and/or towards the housing element 30 in the third opening 33 and/or in the cylindrical section 35. The motion-coupling provides that the volume in the apparatus 20 substantially stays constant so that despite a movement of the coupling element 40 no pressure increase or decrease is induced from the apparatus 20 itself.

Figs. 2A-C elucidates a method and a use according to the invention, wherein a length compensation of the pipe structure 10 is provided. The method includes moving the coupling element 40 relative to the housing element 30 in the coupling direction 41 by means of expansion or retraction of the pipe structure 10 and meanwhile moving the compensation element 50 relative to the housing element 30 proportionately in the compensation direction 51 which is perpendicular to the coupling direction 51. A pressure is being exerted on the compensation element 50 pushing the compensation element 50 away from the housing element 30 which induces a pull force via the linkage device 60 onto the coupling element 40 along the coupling direction 41, especially due to the fluid static pressure being greater than atmospheric pressure.

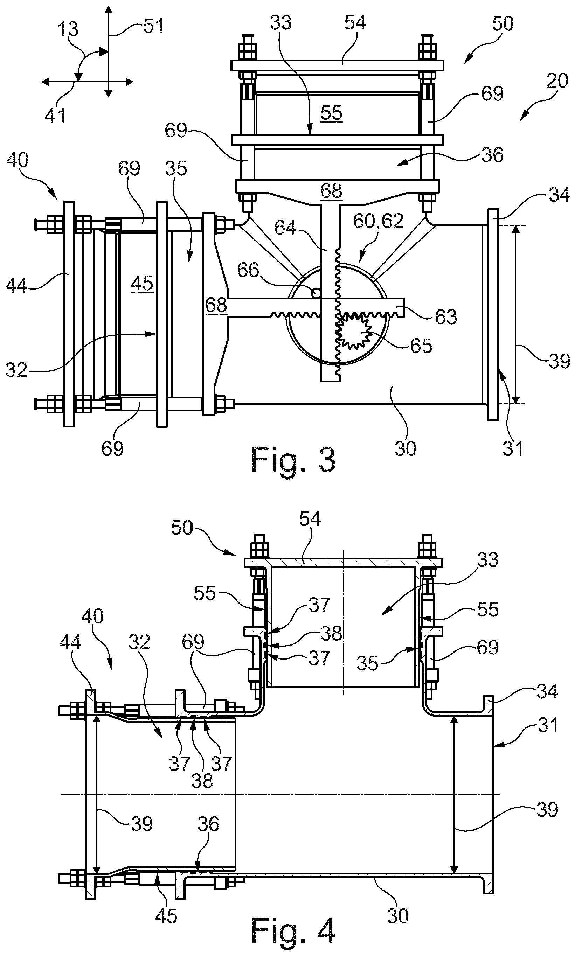

With respect to Fig. 3, it is particularly shown that the guiding rods 69 penetrate through the flange 44 at the coupling element 40 or the lid and/or closure at the compensation element 50. Particularly, the stop element 66 serves to axially guide the racks 63, 64 on the side away from the teeth and/or involute spline of the racks 63, 64.

With respect to Fig. 4, it is particularly shown that the coupling element 40 and/or the compensation element 50 is guided by means of two guiding rings 37. Here, a sealing ring 38 is arranged between the two guiding rings 37. The rings 37, 38 are held in corresponding grooves formed with the housing element 30. The cylindrical section 45 of the coupling element 40 runs on all three rings 37, 38 at the second opening 32 and/or the cylindrical section 36. The cylindrical section 55 of the compensation element 50 runs on all three rings 37, 38 at the third opening 33 and/or the cylindrical section 35. It can also be seen that the compensation element 50 serves to close the third opening 33, particularly fluid-tight and/or leak proof.

With respect to Figs. 5A-B, it is particularly shown in a second embodiment of the apparatus 20 included by an industrial device that the gear wheel 65 is not mounted on the housing element 30 as is the case in Figs. 1 to 4, but rather on a base 22, particularly a stand or pedestal. The base 22 may further include the stop element 66. The base 22 may serve to support the housing element 30 and/or the pipe structure 10.

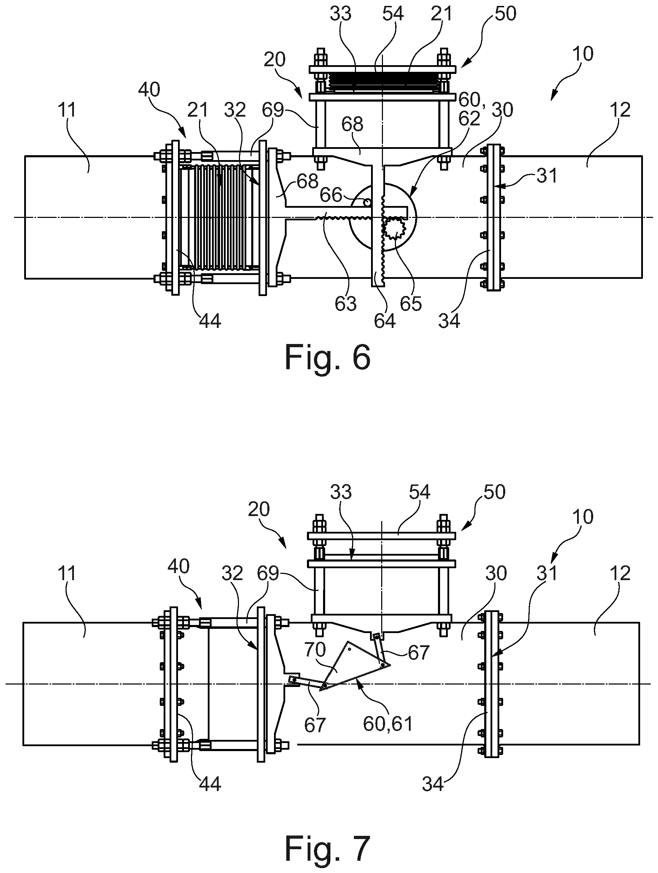

With respect to Fig. 6 a third embodiment of an apparatus 20 included by an industrial device is shown. As a difference to the embodiments of Figs. 1 to 5 it is provided that the coupling element 40 and the compensation element 50 each include a bellow 21 in order to provide the corresponding element 40, 50 be movable relative to the housing element 30 sectionally. Thus, the coupling element 40 and the compensation element 50 are not necessarily designed as pistons and/or do not comprise cylindrical sections 45, 55. The base structure 30 also does not necessarily comprise cylindrical sections 35, 36, guiding rings 37 and/or sealing rings 38. The bellow(s) 21 may however be attached and/or sealed at the housing element 30 with sealing rings.

A movement of the coupling element 40 would make its bellow 21 deform and furthermore induce a movement of the compensation element 50 including a corresponding deformation of the bellow 21 of the compensation element 50. The bellow 21 of the coupling element 40 is attached on one end to the housing element 30 at the second opening 32; the other end of the bellow 21 is essentially attached to the pipe 11 of the pipe structure 10 in order to compensate a change in length of the pipe 11 without any leakage of fluid in the pipe structure 10. The bellow 21 of the compensation element 50 is attached on one end to the housing element 30 at the third opening 33; the other end of said bellow 21 is essentially closed, e.g. by means of a lid and/or closure, to seal the third opening 33.

With respect to Fig. 7 a fourth embodiment of an apparatus 20 included by an industrial device is shown. As a difference to the embodiments of Figs. 1 to 5 it is provided that each of the two linkage devices 60 has a coupling lever means 61 with two coupling levers 67 and a hub 70. The coupling lever means 61 is mechanically coupled with the coupling element 40 and with the compensation element 50 via the two coupling levers 67 and the hub 70. The coupling levers 67 and the hub 70 comprise coupling hinges and/or links for pivotable connections. When the coupling element 40 is moved towards or away from the housing element 30 along the coupling direction 41, the first coupling lever 67 may serve to pivot the hub around a pivot axis fixedly arranged relative to the housing element 30, wherein the hub 70 may serve to push or pull the compensation element 50 along the compensation direction 51 via the second coupling lever 67. The hub 70 is arranged between the coupling levers 67.

With respect to Figs. 8A-B, a fifth embodiment of an apparatus 20 comprised by an industrial device is shown. As a difference to the embodiments of Figs. 1 to 5 it is provided that each of the two linkage devices 60 has a cable, particularly a tension cable 71, redirected about a pulley 74. The tension cable 71 is coupled on one end 72 to the compensation element 50 and on the other end 73 to the coupling element 40. The tension cable 71 is a wire rope. The pulley 74 can rotate about an axis perpendicular to both of the directions 41, 51. The tension cable 71 is attached to the crossbar 69. The pulley 74 is mounted rotatably on the housing element 30, particularly by means of a bearing.

With respect to Figs. 9A-B, a sixth embodiment of an apparatus 20 comprised by an industrial device is shown. As a difference to the embodiment of Fig. 8A-B it is provided that the mounting of the pulley 74 is reinforced by means of a reinforcement element 76 supporting the pulley 74 on a side away from the housing element 30. The reinforcement element 76 is coupled to the pulley 74, particularly its bearing 75, and to the housing element 30.

With respect to Figs. 2-9, the coupling element 40 is at least sectionally movable relative to the housing element 30 along the coupling direction 41 over a distinct distance. The compensation element 50 is at least sectionally movable relative to the housing element 30 along the compensation direction 51 over a further distinct distance which substantially equals the distinct distance and/or which is with the further distinct distance in a distinct ratio. In Fig. 7, the distinct ratio is different to one and/or non-linear due to the lever means 61.

### Reference signs list

- 10: pipe structure
- 11-12: pipe
- 13: motion angle
- 20: apparatus
- 21: bellow
- 22: base
- 30: housing element
- 31-33: opening
- 34: flange
- 35: cylindrical section
- 36: cylindrical section
- 37: guiding ring
- 38: sealing ring
- 39: diameter
- 40: coupling element
- 41: coupling direction
- 44: flange
- 45: cylindrical section
- 50: compensation element
- 51: compensation direction
- 54: lid and/or closure
- 55: cylindrical section
- 60: linkage device
- 61: coupling lever means
- 62: rack and pinion means
- 63-64: rack
- 65: gear wheel
- 66: stop element
- 67: coupling lever
- 68: crossbar
- 69: guiding rod
- 70: hub
- 71: tension cable
- 72-73: end
- 74: pulley
- 75: bearing
- 76: reinforcement element

## Claims

1. Apparatus (20) configured for length compensation of a pipe structure (10), comprising
a housing element (30) with at least three openings (31, 32, 33) of which a first opening (31) is configured for coupling with the pipe structure (10);
a coupling element (40) movably connected with the housing element (30) at a second opening (32) of the at least three openings (31, 32, 33), configured for a movement in a coupling direction (41) and configured for coupling with the pipe structure (10); and
a compensation element (50) movably connected with the housing element (30) at a third opening (33) of the at least three openings (31, 32, 33), configured for a movement in a compensation direction (51) oblique to the coupling direction (41) and closing the third opening (33).

2. Apparatus (20) according to the preceding claim, wherein
the coupling element (40) is at least sectionally movable relative to the housing element (30) along the coupling direction (41), particularly over a distinct distance; and/or
the compensation element (50) is at least sectionally movable relative to the housing element (30) along the compensation direction (51), particularly over a further distinct distance which substantially equals the distinct distance and/or which is with the further distinct distance in a distinct ratio.

3. Apparatus (20) according to one of the preceding claims, wherein the coupling direction (41) and the compensation direction (51) are arranged at a motion angle (13) of more than 10° and/or less than 170°, more preferably at a motion angle (13) of at least 45° and/or up to 105°, in particular at a motion angle (13) of 90°±10° and/or perpendicular, to each other.

4. Apparatus (20) according to one of the preceding claims, wherein the first opening (31) and the second opening (32) are arranged on opposite sides of the housing element (30) and/or face away from each other, preferably wherein the third opening (33) is arranged between the first (31) and the second openings (32).

5. Apparatus (20) according to one of the preceding claims, wherein
the compensation element (50) has a preferably cylindrical section (55) guided in or on a preferably cylindrical section (35) of the housing element (30) particularly along the compensation direction (51); and/or
the coupling element (40) has a preferably cylindrical section (45) guided in or on a preferably cylindrical section (36) of the housing element (30) particularly along the coupling direction (41).

6. Apparatus (20) according to one of the preceding claims, wherein the coupling element (40) and/or the compensation element (50) has a bellow (21).

7. Apparatus (20) according to one of the preceding claims, wherein the coupling element (40) and/or the compensation element (50) is axially guided relative to the housing element (30) by means of guiding rings (37) and/or guiding rods (39).

8. Apparatus (20) according to one of the preceding claims and particularly configured for a pressure balanced length compensation, wherein the coupling element (40) and the compensation element (50) are motion-coupled, preferably by means of a linkage device (60) comprised by the apparatus (20),
preferably wherein a first motion of one of the coupling element (40) and the compensation element (50) induces a second motion of the other one of the elements (40, 50) and in particular wherein the first and second motions are coupled at a preferably at least sectionally proportionate gear or coupling ratio, particularly the gear or coupling ratio being i <= 0,5 or i=1 or i >= 2.

9. Apparatus (10) according to the preceding claim, wherein a cross sectional area of the coupling element (40) at least substantially equals, is larger than or is smaller than a cross sectional area of the compensation element (50).

10. Apparatus (20) according to the preceding claim, wherein the linkage device (60) comprises at least one tension cable (71) particularly redirected about a pulley (74), wherein the at least one tension cable (71) is coupled on one end (72) to the compensation element (50) and on the other end (73) to the coupling element (40).

11. Apparatus (20) according to one of the preceding two claims, wherein the linkage device (60) comprises a coupling lever means (61) with at least one coupling lever (67) particularly having at least one coupling hinge and/or link, which coupling lever means (61), particularly the at least one coupling lever (67), is mechanically coupled with both of the coupling element (40) and the compensation element (50), e.g. via the at least one coupling hinge and/or link.

12. Apparatus (10) according to one of the preceding three claims, wherein the linkage device (60) comprises at least one rack and pinion means (62), particularly including racks (63, 64) and a gear wheel (65), and particularly wherein at least one of the racks (63, 64) is motion-coupled to one of the compensation element (50) and the coupling element (40), the racks (62, 64) engage with the gear wheel (65), and the gear wheel (65) is rotatably held on the housing element (30) or a base (22) of the apparatus (20).

13. Industrial device, which industrial device is a gas-insulated switchgear, a gas-insulated transmission line and/or a fluid carrying line and comprises the apparatus (20) according to one of the preceding claims, especially as a joint, and a pipe structure (10), wherein the pipe structure (10) is coupled to the apparatus (20) and configured to carry a fluid.

14. Method for length compensation of a pipe structure (10), particularly wherein the pipe structure (10) is comprised by the industrial device of the preceding claim, which pipe structure (10) is coupled to a coupling element (40) of an apparatus (20) configured for length compensation of a pipe structure (10) and especially configured as a joint, comprising the steps of
moving the coupling element (40) relative to a housing element (30) of the apparatus (20) in a coupling direction (41) particularly by means of expansion or contraction of the pipe structure (10), and meanwhile
moving a compensation element (50) relative to the housing element (30) proportionately to the movement of the coupling element (40) in a compensation direction (51) which particularly is oblique to the coupling direction (41),
particularly wherein a pressure is exerted on the compensation element (50) pushing the compensation element (50) away from the housing element (30) which induces a pull force onto the coupling element (40).

15. Use of the apparatus (20) according to one of claims 1 to 12 for length compensation of and/or as a joint for a pipe structure (10),
wherein the pipe structure (10) is comprised by an industrial device which is a gas-insulated switchgear, a gas-insulated transmission line and/or a fluid carrying line,
particularly wherein the pipe structure (10) is used for carrying a fluid and/or carries a fluid, such as gas, steam, liquid or a mixture thereof, particularly the fluid being electrically insulating.
